# EUROPEAN PATENT APPLICATION

(11) **EP 1 990 214 A1**
(43) Date of publication of application: **12.11.2008**
(21) Application number: 08005649.2
(22) Date of filing: 26.03.2008
(51) Int. Cl.: B60B 21/06, B21D 53/30, B23P 13/02

(54) **Rim and bicycle wheel with wings with compensated flaring**

(30) Priority: 07.05.2007 IT MI20070917
(71) Applicant: CAMPAGNOLO S.r.l., 36100 Vicenza (VI) (IT)
(72) Inventor: Granieri, Amleto, 36100 Vicenza (IT); Andriolo, Riccardo, 36050 Sovizzo (Vicenza) (IT)
(74) Representative: Checcacci, Giorgio

(57) **Abstract**

The rim comprises a pair of wings connected by at least one bridge (6,23,26) and is characterised in that the wings (7,8;27,28;127,128;227,228;327,328) converge in the radially outward direction.

## Description

The present invention refers to a rim for a bicycle wheel, to a wheel comprising such a rim and to a process for making such a rim and such a wheel.

In common usage, the term rim is often used to refer to a wheel (of a bicycle or other) without a tyre. However, in the following description, by the term rim it is meant to indicate more precisely the peripheral part of the wheel of a bicycle to which the tyre is fitted. Normally, therefore, a wheel comprises a rim connected to a hub through a plurality of spokes or arms.

Typical configurations of the cross section of a bicycle rim are U-shaped or inverted A-shaped. In U-shaped rims there are two side walls and a radially inner circumferential wall, also known as "lower bridge" or even simply "bridge" (in the absence of other bridges). In inverted A-shaped rims, on the other hand, there is both a "lower bridge" and an "upper bridge"; more specifically, there is a radially inner portion of the cross section of the rim, formed from a chamber defined by the upper bridge (outer in the radial direction), by two side walls and by the lower bridge (inner in the radial direction).

The side walls of the rim extend radially outwards, beyond the lower bridge in the case of a U-shaped rim and beyond the upper bridge in the case of an inverted A-shaped rim, to define circumferential wings for fitting a tyre. The circumferential wings have outer sides in the form of outer annular surfaces substantially parallel with respect to the middle plane of the rim (and substantially parallel to each other). On such outer sides, braking races are normally formed that provide braking surfaces on which the two brake pads close.

Making rims from metal, in particular aluminium, involves extruding a profile with a section substantially the same as that desired for the final rim, cutting a blank of the profile, calendering it to obtain a circular element, and finally jointing end-to-end, for example through the insertion of a joint that is glued to the inner walls of the chamber, or else through welding with the insertion of one or more joints glued or in any case fixed in the chamber of the rim, or else through pins or similar. The circular element is then perforated to make the holes to mount the spokes in predetermined spoke attachment areas, which follow one another circumferentially alternating with intermediate areas; a machining process (turning) is also carried out on the outer sides of the wings to form the braking races with braking surfaces parallel to one another, which are therefore a constant distance apart for the entire circumference of the rim.

It should be noted that by spoke attachment area in general a portion is meant, extending circumferentially on the rim, in which a single spoke or else a set of spokes grouped close together are fastened.

Then the spokes are connected to the holes of the rim and to the central hub and then the spokes are tightened to make the wheel.

Finally, the tyre and the inner tube (if provided) are mounted and then inflation takes place according to the desired pressures (normally between 6 and 10 atm).

In rims made from composite material, the braking races with parallel braking surfaces are obtained during the moulding step of the rim itself. Unlike rims made from metallic material, rims made from composite material have no jointing, since they are already annular from the outset.

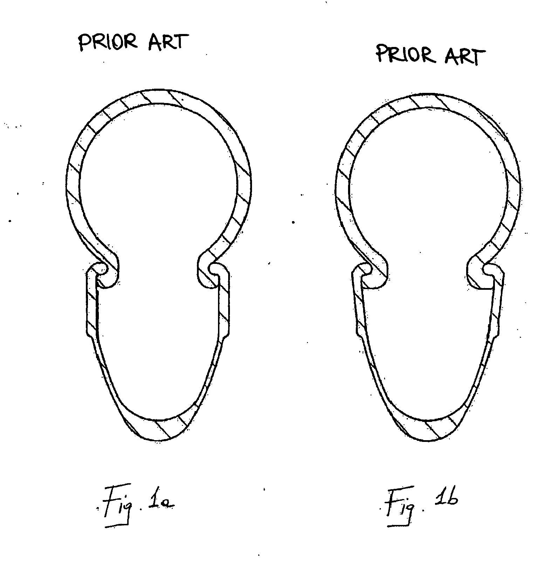

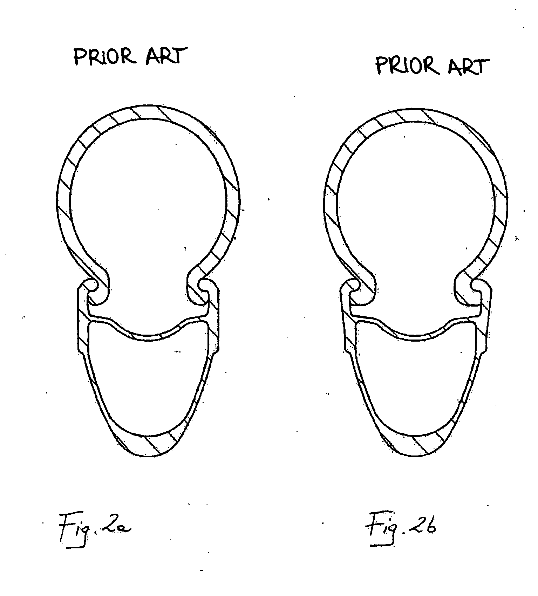

It has been found that in practice known wheels that use the described rims have the drawback that at the moment of inflation of the tyre the circumferential wings for fitting the tyre deform outwards under the pressure of the tyre; as a result of this there is a flaring effect of the wings that leads to both an increase in the distance between the wings and therefore between the braking races along the entire circumference, and above all a loss of parallelism of the wings and therefore of the braking races, with a reduction in the braking efficiency of the brake pads when they rest on the braking races and with problems of air seal for wheels with tubeless tyres. This flaring effect is shown in figures 1 a and 1 b and in figures 2a and 2b, for U-shaped and inverted A-shaped rims, respectively. In figures 1 a and 2a the tyre mounted on the rim is deflated, whereas in figure 1b and 2b the tyre is inflated.

It has also been found that in practice known wheels that use the described rims have the drawback that the distance between the wings is not constant along the circumference of the wheel (waving effect), with problems of vibration and noisiness during braking caused by the pads that push upon the wings and with problems of air seal for wheels with tubeless tyres.

The waving of the distance between the wings and therefore between the braking races is induced on the rim during the assembly of the wheel. The degree of waving depends upon the type of material used and upon the type of geometry of the section of the rim (shape, length of the side walls, etc.).

A first type of waving, distributed over the entire circumference of the wheel, is caused at the moment when the spokes are tightened, to a particularly marked extent in wheels with the spokes grouped together, since the traction force, oriented towards the centre of the rim in the spoke attachment area due to the spokes being tightened, causes a variation in distance between the wings and therefore between the braking races.

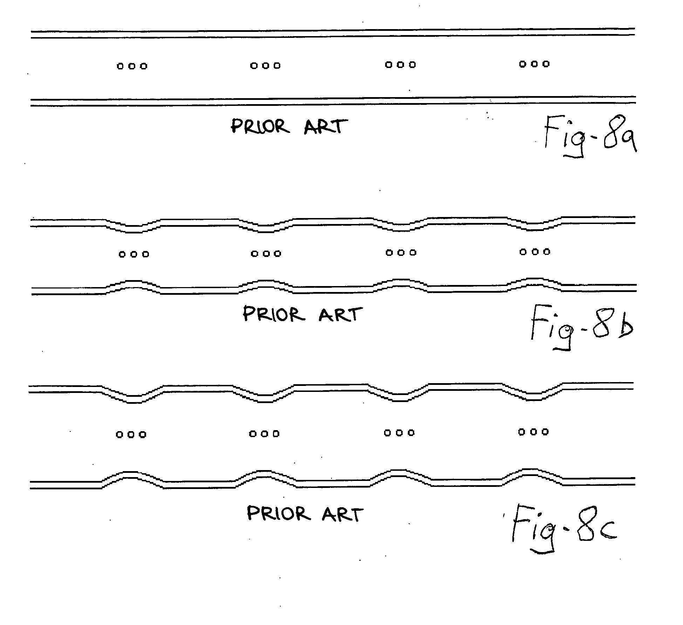

In the case of rims with U-shaped configuration (schematic views of figures 8a-8c in which such views represent a blank of the rim seen from the outside along its extension), the bridge is substantially pulled by the spokes towards the centre of the rim and the wings move towards one another; therefore, the distance between the wings in the spoke attachment area is in the end less than the distance between the wings in the intermediate areas (figure 8b). When the tyre is mounted on the wheel and inflated, the wings also undergo the flaring effect described above, since they are pushed laterally outwards by the pressure of the tyre along the entire circumference of the rim; and therefore the wings move apart (figure 8c). The distributed waving effect of the spoke attachment area therefore arises once again on the wheel with the tyre inflated, in addition to the flaring effect.

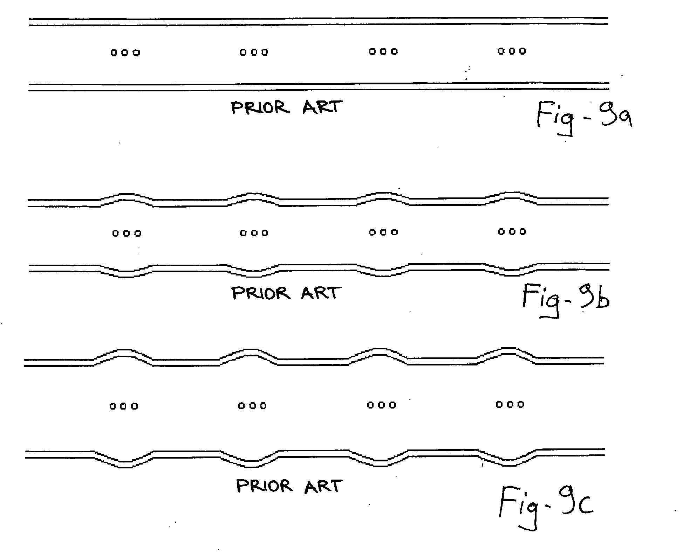

In the case of rims with inverted A-shaped configuration, with spokes attached to the lower bridge (schematic views of figures 9a-9c in which such views represent a blank of the rim seen from the outside along its extension), when the section is pulled by the spokes towards the centre of the rim, due to the presence of the upper bridge, there is a deformation of the wings outwards at the spoke attachment area; therefore, in the end in the spoke attachment areas the distance between the wings is greater than the distance between the wings in the intermediate areas creating the waving effect (figure 9b). When the tyre is mounted on the wheel and inflated, the wings also undergo the flaring effect described above, being pushed laterally outwards by the pressure of the tyre along the entire circumference of the rim; therefore the wings move apart (figure 9c). Moreover, because of the different rigidity of the rim in the spoke attachment areas compared to the intermediate areas, due to the traction of the spokes, the waving effect with the tyre inflated (fig. 9c) is increased with respect to the waving effect with the tyre deflated (fig. 9b). In the spoke attachment areas, therefore, the wings subjected to the pressure of the inflated tyre undergo a greater deformation than the deformation that they undergo in the intermediate areas. The distributed waving effect of the spoke attachment area arises once again on the wheel with the tyre inflated, in addition to the flaring effect.

For both the U-shaped and inverted A-shaped configurations, the variation in distance between the wings in the spoke attachment areas compared to the distance between the wings in the intermediate areas results in a waving effect of the braking races; this waving is distributed, i.e. substantially repeats cyclically along the circumference of the rim according to the distribution of the spokes. This distributed waving occurs both on metallic rims, and on rims made from composite material, since it is not linked to the type of material from which the rim is made nor to the possible presence of a joint.

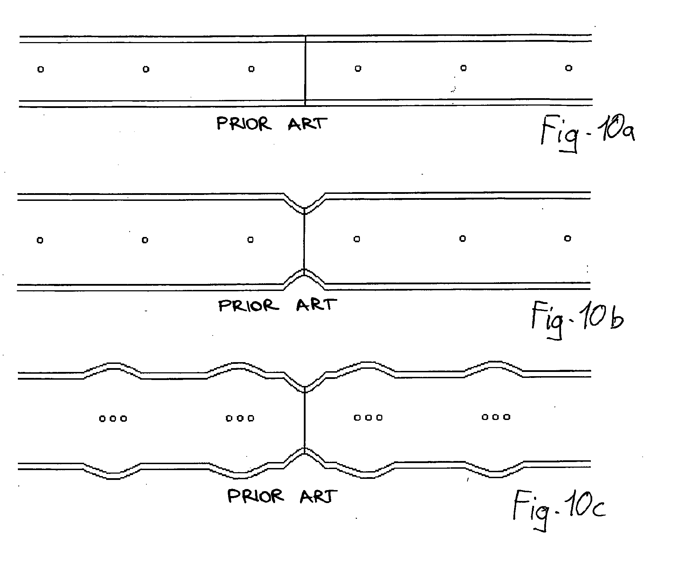

A second type of waving (figures 10a-10b), not distributed cyclically along the circumference of the rim but rather localised in a single area, is caused at the moment of inflation of the tyre on wheels provided with rims with a joint, both in wheels with single spokes (to which figures 10a and 10b refer) and in wheels with grouped spokes. The inflation of the tyre, as stated above, results in an inevitable deformation of the wings that are pushed outwards by the pressure of the tyre. However, such a deformation is not homogeneous along the entire circumference of the rim, since at the jointing area the rim has a greater rigidity than at the other areas of the rim. In particular, the greater rigidity of the jointing area is due to the welding on the one hand and to the joints inserted on the other (in rims with welding and joint such an effect is the sum of the two, whereas it is less evident where jointing is carried out with a joint glued to the wall of the chamber of the rim and without welding).

Therefore, the deformation of the wings in the jointing area is less than the deformation of the wings in the rest of the rim. In the wheel provided with an inflated tyre, therefore, the braking surfaces have a narrowing at the jointing area (localised waving), as shown in fig. 10b. Fig. 10c shows (for a wheel with grouped spokes) both the effect of localised waving in the jointing area, and the distributed waving effect due to the spokes being tightened, as represented in figures 9a-9c. Localised waving is normally of a greater magnitude (about double) compared to distributed waving caused by the spokes being tightened.

Consequently, the problem at the basis of the present invention is to improve the braking efficiency and the air seal, for wheels with tubeless tyres.

Such a problem is solved by a rim according to claim 1, by a wheel according to claim 9, as well as by a process according to claim 15 and by a process according to claim 22.

More specifically, in a first aspect thereof the invention concerns a rim, suitable for being coupled with a hub to form a bicycle wheel, comprising a pair of wings connected by at least one bridge, characterised in that the wings converge.

In this way, it is possible to induce an advance deformation in the rim before it is assembled in a wheel in the direction opposite the direction of deformation by flaring that the rim will undergo after inflation of the tyre once mounted in a wheel; consequently, the wheel can in the end have a substantially reduced flaring deformation (possibly even zero), with an improvement in the air seal in the case of assembly of a wheel with a tubeless tyre.

In the case in which each wing has an outer side on which a braking race is formed, an improvement in braking efficiency is also obtained.

Preferably, the axial distance between the wings is measured between the outer sides thereof.

In the case in which the rim comprises a plurality of spoke attachment areas, alternating in the circumferential direction with a plurality of intermediate areas in said at least one bridge, preferably the axial distance between the wings at the spoke attachment areas is different to the axial distance between the wings at the intermediate areas.

In this way, it is possible to induce an advance deformation in the rim before it is assembled in a wheel in the direction opposite the direction of deformation by distributed waving that the rim will undergo afterwards, due to assembly in the wheel; consequently, the wheel can in the end have a substantially reduced distributed waving deformation (possibly even zero), with an improvement in the braking efficiency and improvement of the air seal in the case of assembly of a wheel with a tubeless tyre.

In the case in which the rim comprises a single bridge between the pair of wings (U-shaped configuration), the axial distance between the wings at the spoke attachment areas is greater than the axial distance between the wings at the intermediate areas.

In the case in which the rim comprises a lower bridge and at least one upper bridge between the pair of wings (inverted A-shaped configuration or configuration with many chambers), the axial distance between the wings at the spoke attachment areas is less than the axial distance between the wings at the intermediate areas.

The rim can be made from composite material or else metal, from a blank that is extruded, calendared into circular shape and closed upon itself through jointing between the ends of the blank. In this last case, when the rim is mounted in a wheel and the tyre is inflated, there is also the drawback of localised waving, and therefore the axial distance between the wings at the jointing area is preferably provided to be greater than the axial distance between the wings at the areas far from the jointing area.

Preferably, the axial distance between the wings at the jointing area is greater than the axial distance between the wings at the spoke attachment areas as well as the axial distance between the wings at the intermediate areas.

In a second aspect thereof, the invention more specifically concerns a bicycle wheel, comprising a hub, a rim and a plurality of spokes or arms for connecting the rim to the hub, in which the rim comprises a pair of wings for holding a tyre connected by at least one bridge, characterised in that, when the tyre is dismounted from the wheel or else - if it is mounted - it is flat, the wings converge.

In such a wheel, the advance deformation induced in the rim is in the opposite direction to the direction of deformation by flaring that the rim will undergo after inflation of the tyre once mounted in a wheel; consequently, the wheel has a substantially reduced deformation by flaring (possibly even zero), with an improvement in the braking efficiency and improvement of the air seal in the case of assembly of a wheel with a tubeless tyre.

Preferably, when the tyre is mounted on the wheel and is inflated, the wings converge less or, more preferably, are parallel. The deformation by flaring is thus completely compensated.

In the case in which the rim comprises a plurality of spoke attachment areas, alternating in the circumferential direction with a plurality of intermediate areas in said at least one bridge, preferably the wings of the rim deformed by the tension of the spokes are the same distance apart at the spoke attachment areas and at the intermediate areas. The deformation by distributed waving is thus completely compensated.

In the case in which the rim is made from metal from a blank that is extruded, shaped into circular shape and closed upon itself through application of a joint between the ends of the blank, then preferably, when the tyre is dismounted from the wheel or else - if it is mounted - it is flat, the axial distance between the wings at the joint is greater than the axial distance between the wings at the areas far from the joint.

More preferably, when the tyre is mounted on the wheel and is inflated, the axial distance between the wings at the joint is equal to the axial distance between the wings at the areas far from the joint. The deformation by localised waving is thus completely compensated.

In a third aspect, the invention more specifically concerns a process for making a rim suitable for being mounted in a bicycle wheel, comprising the step of:
a) providing a pair of wings connected by at least one bridge,
   characterised in that in step a) the wings are formed converging.
   Preferably, the process comprises the step of:
b) providing a plurality of spoke attachment areas and a plurality of intermediate areas, alternating in the circumferential direction, in said at least one bridge;
and in it in step a) it is provided for the wings to be shaped and sized so that the distance between the wings at the spoke attachment areas are different to the distance between the wings at the intermediate areas.

Preferably, step a) provides forming the blank directly with the wings spaced apart non-uniformly.

Alternatively, according to a method that is also preferred, step a) comprises the substeps of:
a') forming the rim with the wings spaced apart between them uniformly along the entire blank;
a") deforming the wings varying the distance at the spoke attachment areas and/or at the intermediate areas.

Preferably, step a") comprises bending the wings inwards and/or outwards at the spoke attachment areas and/or at the intermediate areas.

According to an alternative method that is also preferred, step a") comprises removing material from outer sides of the wings at the spoke attachment areas and/or at the intermediate areas.

Preferably, the rim is made from metal from a blank that is extruded, shaped into circular shape and closed upon itself through jointing between the ends of the blank, and the process also comprises the steps of:
c) deforming the wings so that the axial distance between the wings at the jointing area is greater than the axial distance between the wings at the areas far from the jointing area.

In a fourth aspect, the invention more specifically concerns a process for making a bicycle wheel, comprising the steps of:
a) making a rim comprising a pair of wings connected by at least one bridge;
b) connecting the rim with a hub through spokes or arms;
characterised in that in step a) the wings are formed converging.

Further characteristics and advantages of the present invention shall become clearer from the following detailed description of some preferred embodiments thereof, made with reference to the attached drawings. In such drawings:
- figures 1 a and 1 b show a wheel with a rim of the prior art with U-shaped configuration, in two configurations with the tyre deflated and with the tyre inflated, respectively;
- figures 2a and 2b show a wheel with a rim of the prior art with inverted A-shaped configuration, in two configurations with the tyre deflated and with the tyre inflated, respectively;
- figure 3a shows a section of a rim according to the invention, with U-shaped configuration;
- figure 3b shows a section of a wheel that uses the rim of figure 3a, with the tyre mounted and deflated;
- figure 3c shows the wheel of figure 3b, with the tyre inflated;
- figure 4a shows a section of a rim according to the invention, with inverted A-shaped configuration;
- figure 4b shows a section of a wheel that uses the rim of figure 4a, with the tyre mounted and deflated;
- figure 4c shows the wheel of figure 4b, with the tyre inflated;
- figures 5a to 5c show the steps of a process for obtaining the rim of figure 3a;
- figures 6a to 6c show the steps of a process for obtaining the rim of figure 4a;
- figures 7a to 7e show the steps of another process for obtaining the rim of figure 4a;
- figures 8a to 8c, 9a to 9c and 10a to 10c show rims of the prior art with the waving effects highlighted; more specifically:
   - figure 8a shows a rim with U-shaped configuration and with grouped spokes before the spokes are applied and tightened;
   - figure 8b shows the rim of figure 8a after the spokes are tightened;
   - figure 8c again shows the rim of figure 8a after it has been mounted in a wheel and the tyre has been inflated;
   - figure 9a shows a rim with inverted A-shaped configuration and with grouped spokes before the spokes are applied and tightened;
   - figure 9b shows the rim of figure 9a after the spokes are tightened;
   - figure 9c again shows the rim of figure 9a after it has been mounted in a wheel and the tyre has been inflated;
   - figure 10a shows a rim with single spokes, before it has been mounted in a wheel;
   - figure 10b shows the rim of figure 10a after it has been mounted in a wheel and the tyre has been inflated;
   - figure 10c shows a rim with grouped spokes, after the spokes have been tightened and after it has been mounted in a wheel and the tyre has been inflated;

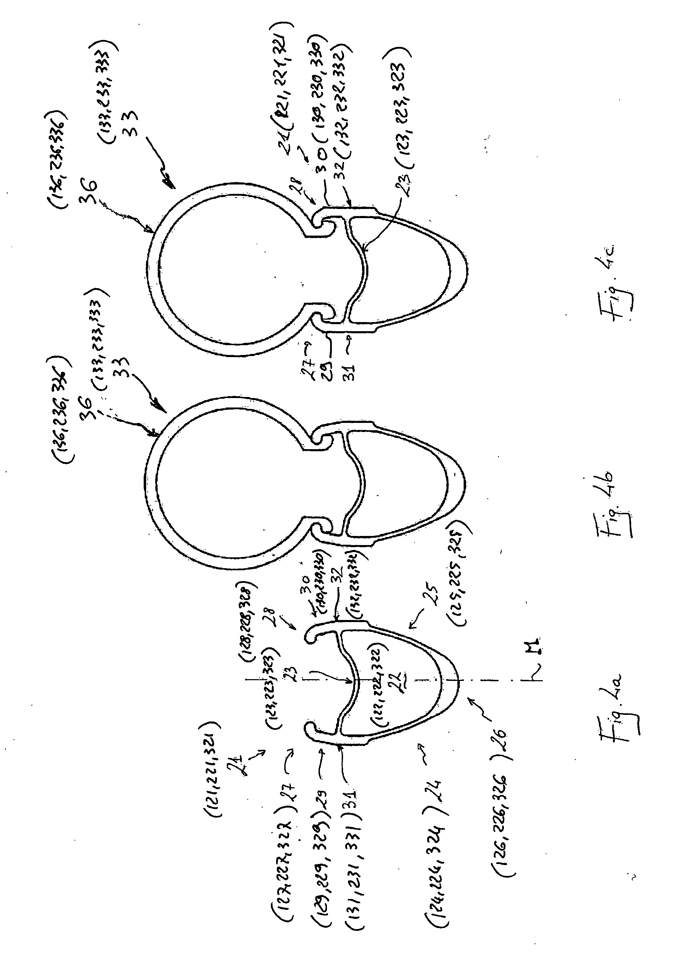

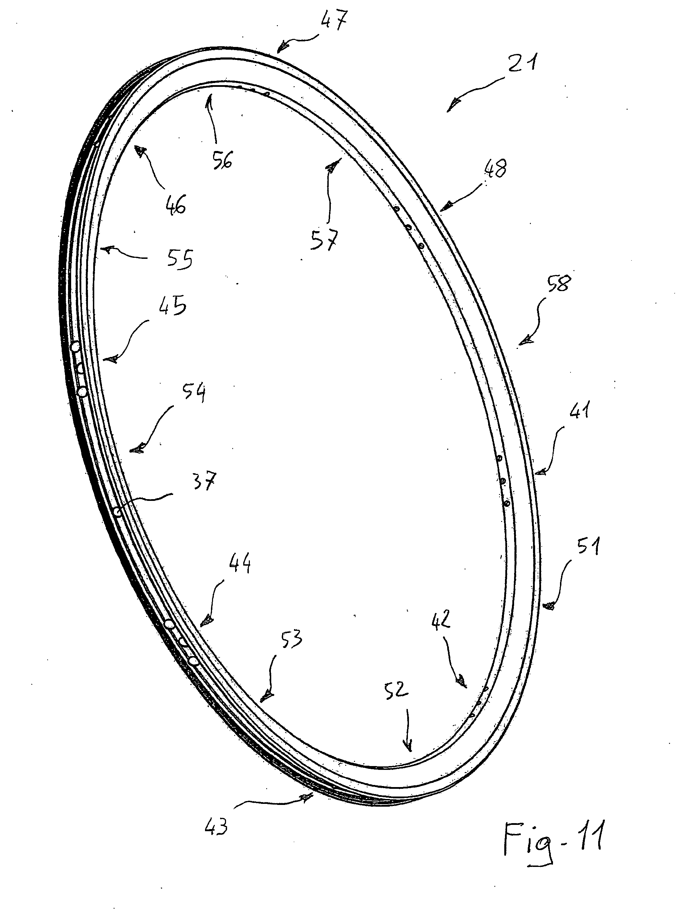

- figure 11 shows an axonometric view of a rim according to the invention, of the type made from composite material, without a joint, having a section as shown in figure 4a;

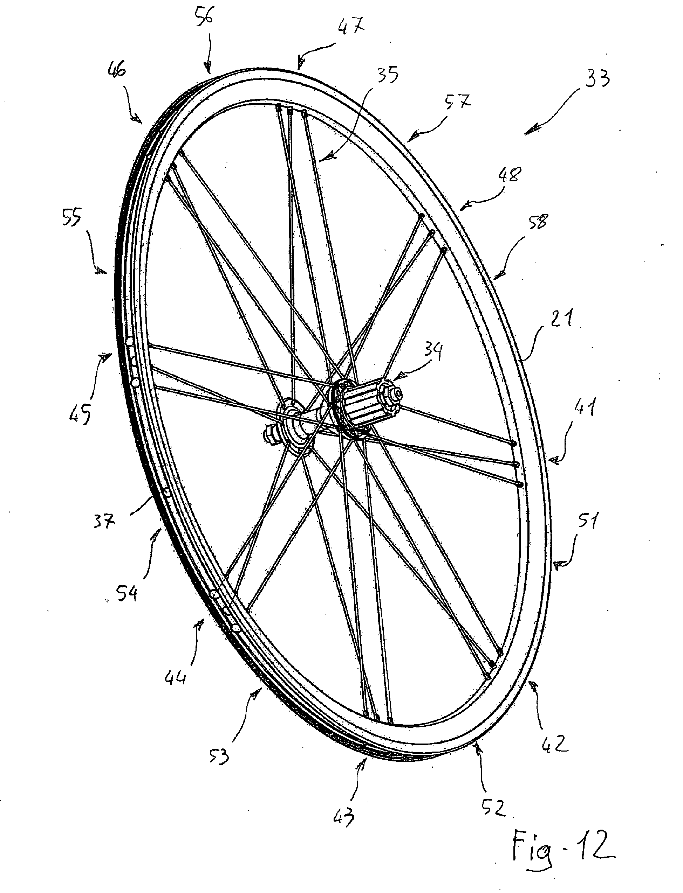

- figure 12 shows an axonometric view of a rear wheel with grouped spokes that uses the rim of figure 11, without a tyre;

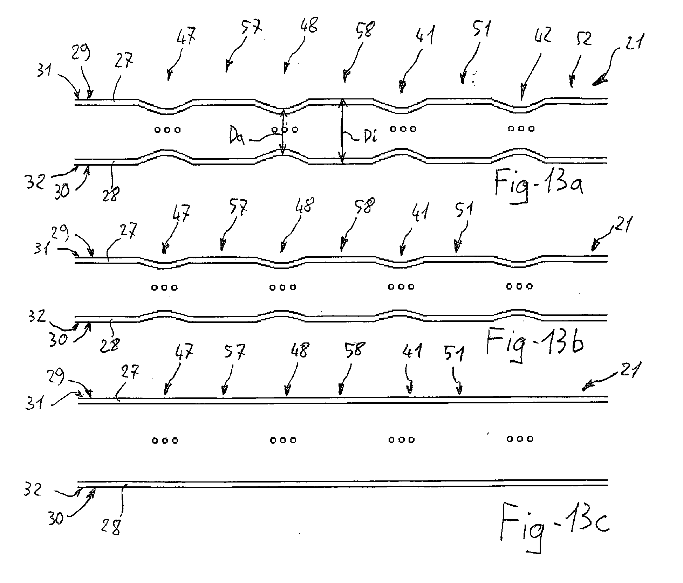

- figures 13a and 13b schematically show steps of a process for obtaining the wheel of figure 12;

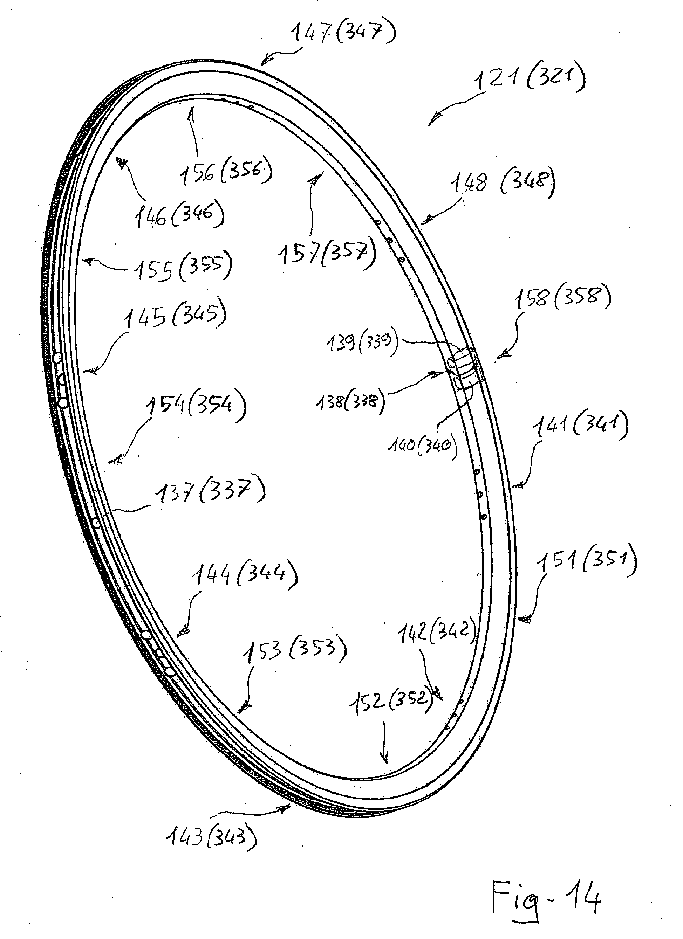

- figure 14 shows an axonometric view of a rim according to the invention, of the metallic type, with a joint, having a section as shown in figure 4a;

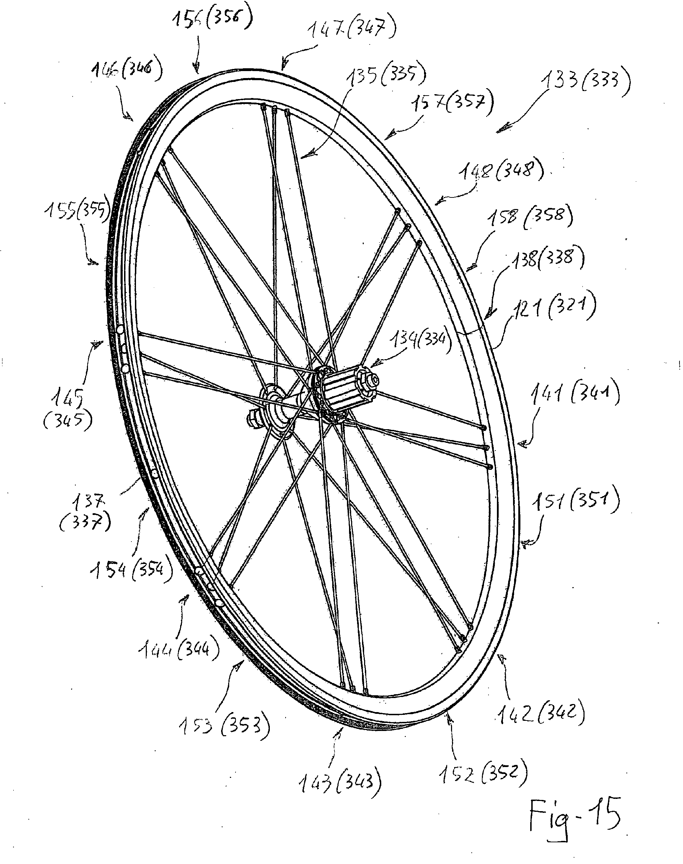

- figure 15 shows an axonometric view of a rear wheel with grouped spokes that uses the rim of figure 14, without a tyre;

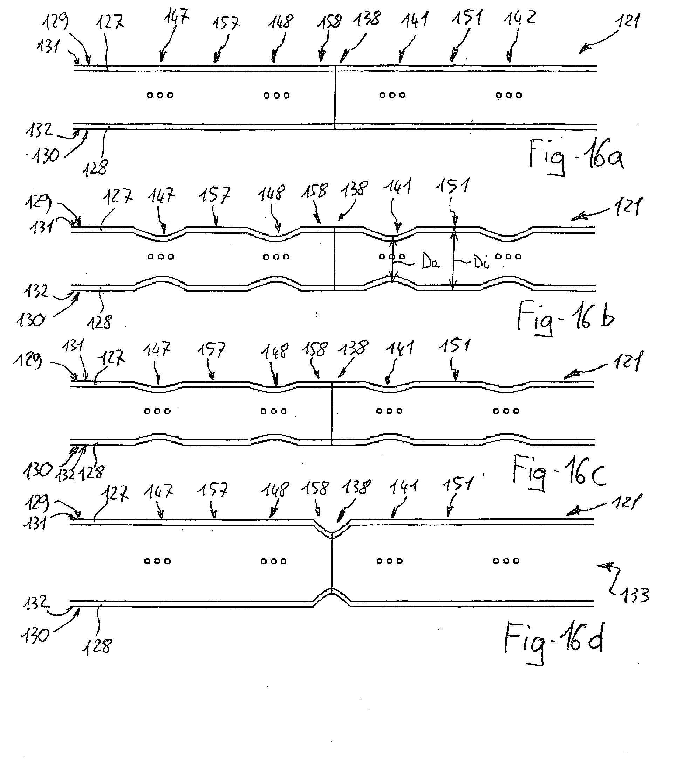

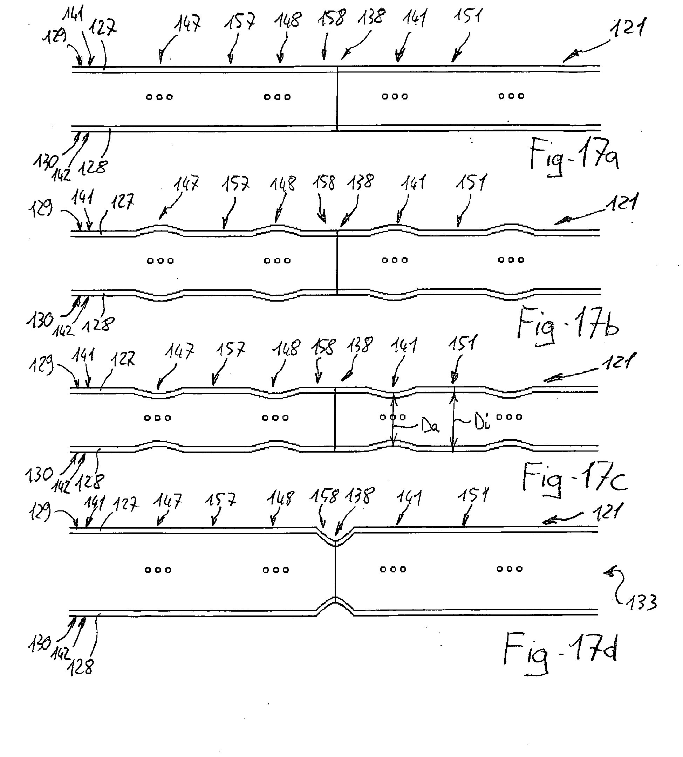

- figures 16a to 16c and 17a to17c, schematically show process steps for obtaining the wheel of figure 15;

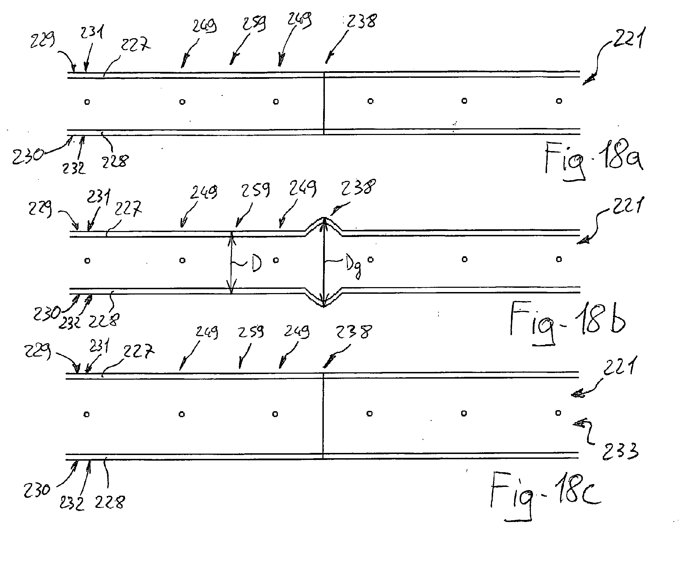

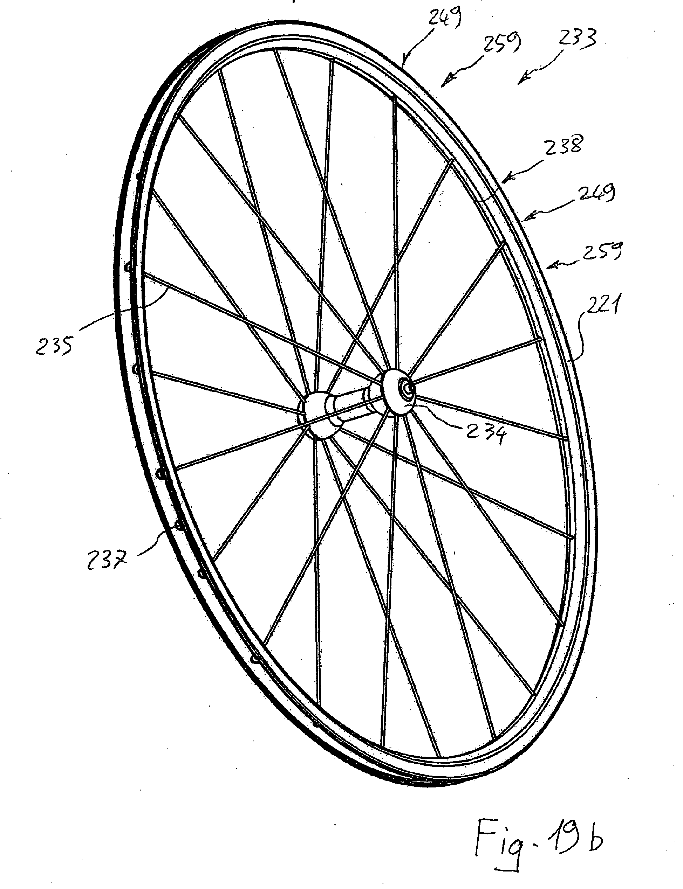

- figures 18a to 18c schematically show the steps of a process for obtaining the wheel of figure 19b;

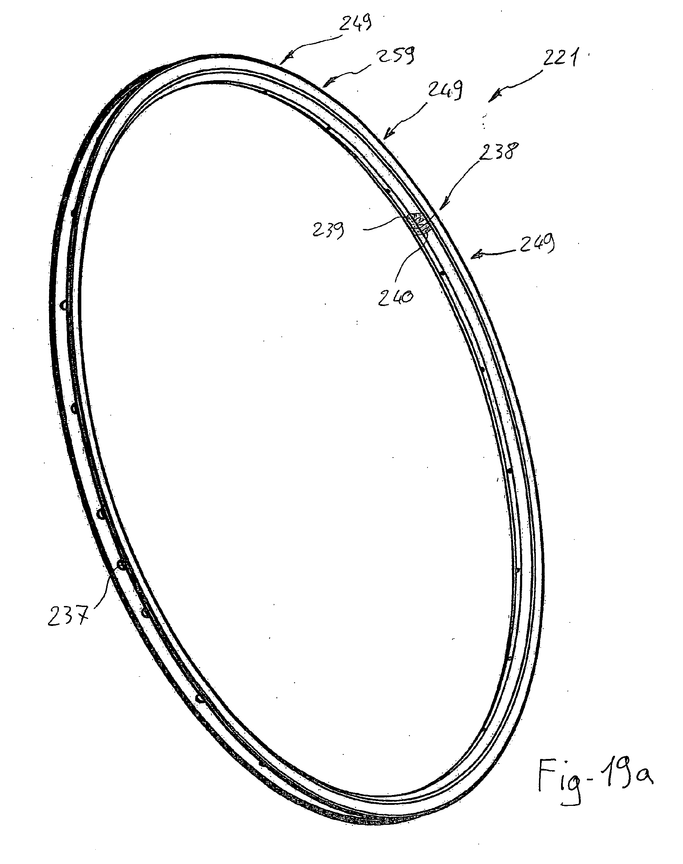

- figure 19a shows an axonometric view of a rim according to the invention, of the metallic type, with a joint, having a section as shown in figure 4a;
- figure 19b shows an axonometric view of a front wheel with single spokes that uses the rim of figure 19a, without a tyre;

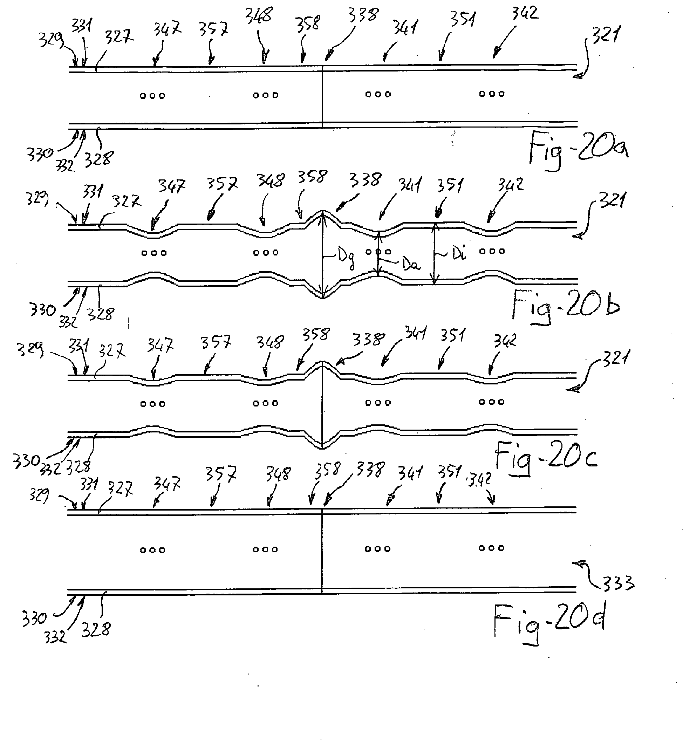

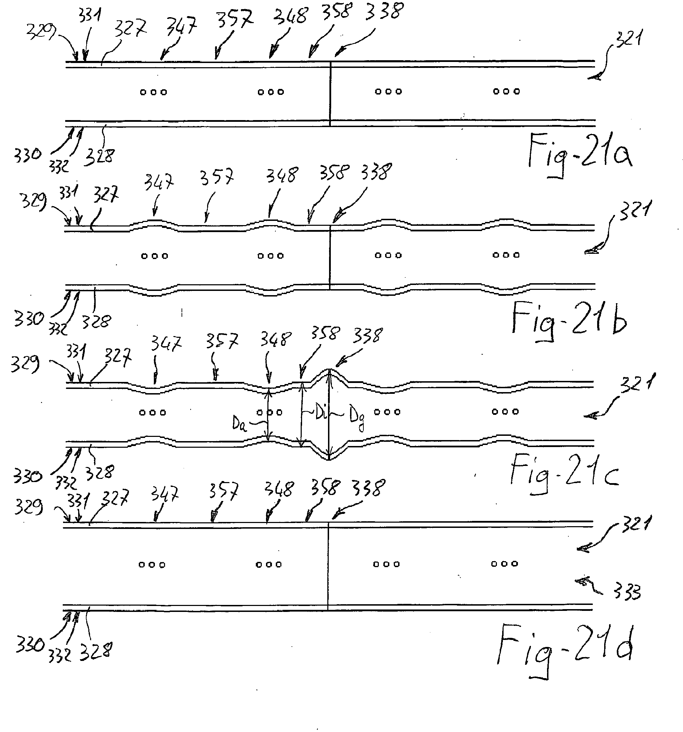

- figures 20a to 20d and 21a to 21d, schematically show process steps for obtaining the wheel of figure 15;

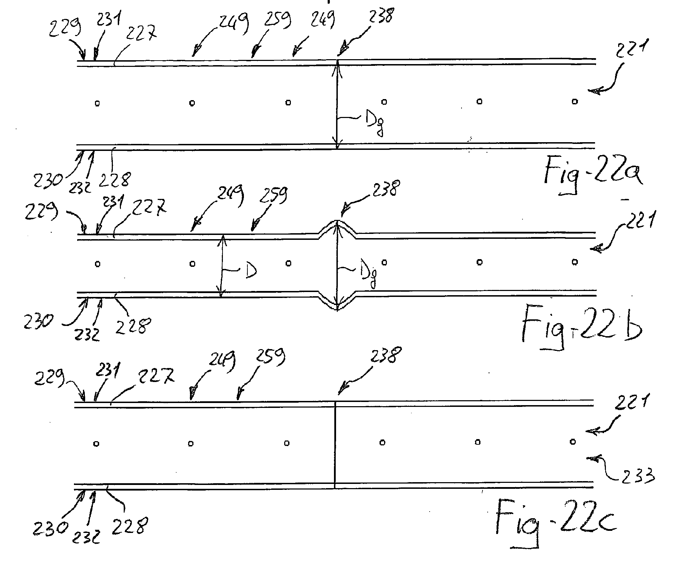

- figures 22a to 22c schematically show the steps of a process for obtaining the wheel of figure 19b;

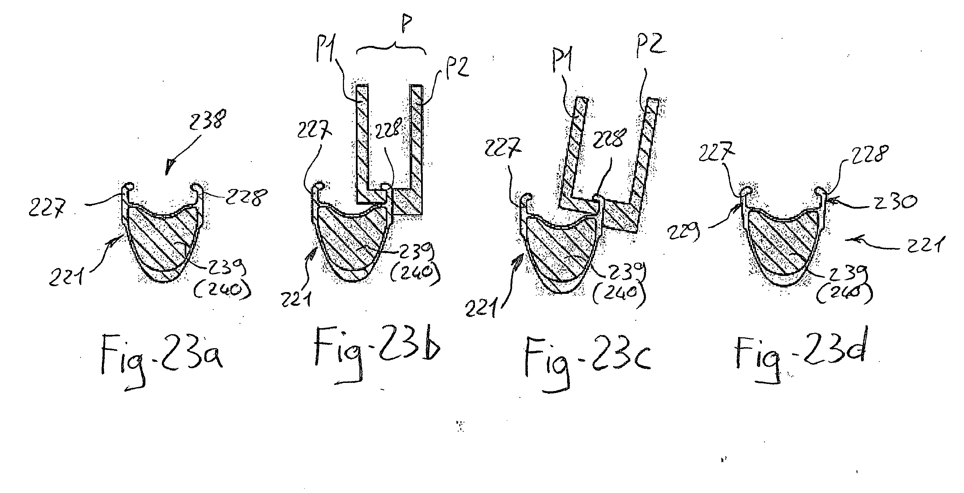

- figures 23a to 23d, 24a to 24d, 25a to 25e, 26a to 26c schematically show deformation processes of the wings.

### Flaring effect compensation

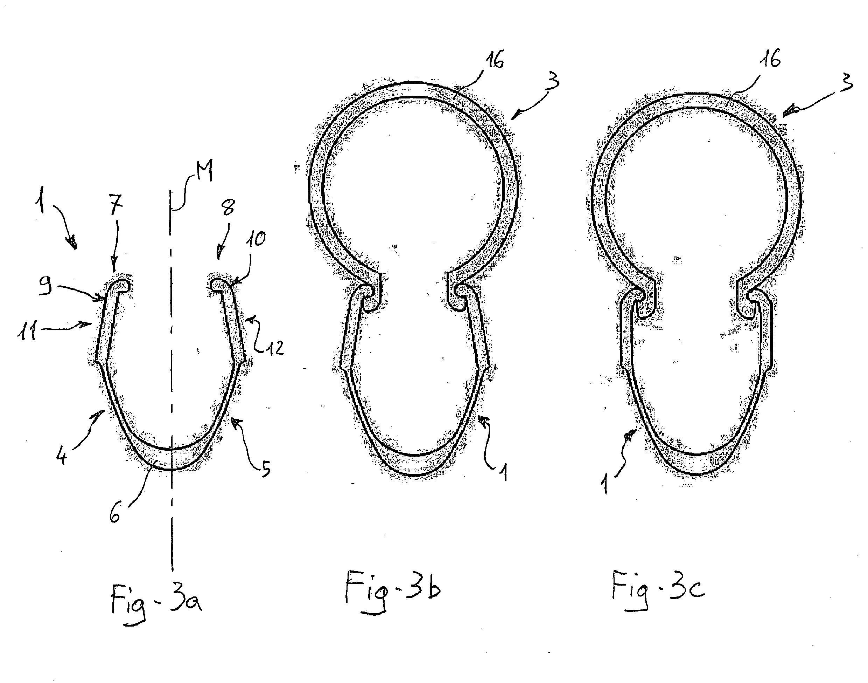

Figure 3a shows the section of a rim 1 according to the invention that has a section with U-shaped configuration comprising two side walls 4, 5 and a radially inner circumferential wall 6 (lower bridge). The side walls 4, 5 extend radially outwards to define two circumferential wings 7, 8 for fitting a tyre 16. The circumferential wings 7, 8 have outer sides 9, 10 on which braking races 11, 12 are formed that provide braking surfaces on which the two brake pads (not shown) close during braking.

As shown in figure 3a, the braking races 11, 12 are not parallel to one another, but rather converge: their distance apart (and the distance from the middle plane M of the rim 1) decreases as the distance from the centre of the rim 1 increases. The progression shown in the figures is intentionally exaggerated in order to show this clearly; real values for such a narrowing are of the order of tenths of a mm.

The rim 1 is used to make a wheel 3, together with a hub connected to the rim 1 by spokes (neither the hub nor the spokes are shown in figures 3a to 3c) and to the tyre 16, mounted on the rim 1 between the wings 7, 8. When the tyre 16 is mounted on the rim 1 (figure 3b) and then inflated (figure 3c), the wings 7, 8 deform outwards, with a flaring effect. Such flaring is compensated by the original convergence of the wings 7, 8 and therefore in the wheel 3 with the tyre 16 inflated the braking races 11, 12 converge less and, at best, are parallel (as shown in fig. 3c).

Figure 4a shows the section of a rim 21 according to the invention that has an inverted A-shaped section. The radially inner body region is formed from a chamber 22, defined by a radially outer circumferential wall or upper bridge 23, by two side walls 24, 25 and by a radially inner circumferential wall or lower bridge 26. The side walls 24, 25 extend radially outwards to define circumferential wings 27, 28 for fitting a tyre 36. The circumferential wings 27, 28 have outer sides 29, 30 on which braking races 31, 32 are formed that provide braking surfaces on which the two brake pads (not shown) close during braking.

As shown in figure 4a, the braking races 31, 32 are not parallel to one another, but rather converge: their distance apart (and the distance from the middle plane M of the rim 21) decreases as the distance from the centre of the rim 21 increases, starting substantially from the height of intersection with the upper bridge 23. A typical value of this narrowing is 0.15mm for each wing 27, 28, for a total of 0.3mm.

The rim 21 is used to make a wheel 33, together with a hub connected to the rim 21 by spokes (the hub and the spokes are not shown in figures 4a to 4c, but are shown in figure 12) and to a tyre 36, mounted on the rim 21 between the wings 27, 28. When the tyre 36 is mounted on the rim 21 (figure 4b) and then inflated (figure 4c), the wings 27, 28 deform outwards, starting substantially from the intersection with the upper bridge 23, with a flaring effect. Such flaring is compensated in the wheel 33 with the tyre 36 inflated by the original convergence of the wings 27, 28 and therefore in the wheel 33 with the tyre 36 inflated the braking races 31, 32 converge less and, at best, are parallel (as shown in fig. 4c).

### Distributed waving effect compensation

### Distributed waving effect compensation on a rim made from composite material

Figures 11 and 12 show perspective views of the rim 21 and the wheel 33.

The wheel 33 represented is a rear wheel, of the type with grouped spokes, and comprises the rim 21, a hub 34 and a set of spoke connections 35 between the hub 34 and the rim 21.

The set of spoke connections 35 (also known as spoking) of the wheel 33 comprises twenty-four spokes 35 grouped in eight sets of three. There are therefore eight spoke attachment areas 41-48, each comprising three individual spoke attachment seats, alternating with eight intermediate areas 51-58.

The rim 21 is made from composite material, for example made by moulding and cross linking or setting of a fibrous material, such a carbon fibre, in a matrix of polymeric material. The details on the construction of the rim 21 in general can be found, for example, in EP 1 231 077, incorporated here by reference. The rim 21 is in one piece, and therefore there is no jointing.

In the rim 21 a hole 37 is formed for housing a valve for retaining air inside the tyre 36 (not shown in figures 11 and 12) that can be associated with the outside of the rim 21.

As schematically shown in figure 13a, the outer sides 29, 30 of the wings 27, 28 with the braking races 31, 32 are waved: indeed, at each spoke attachment area 41-48, the outer sides 29, 30 of the rim 21 are a shorter distance Da apart in the axial direction (with reference to the axis of the wheel 33) than their distance Di at the intermediate areas 51-58. The progression shown in the figures is intentionally exaggerated for the sake of clarity; real values for Da and Di can, indeed, be Da=20.70mm and Di=20.80mm.

The distance in the axial direction between the outer sides 29, 30 varies progressively between the spoke attachment areas 41-48 and the intermediate areas 51-58, as shown by figure 13a.

When the wheel 33 is assembled using the rim 21 and the spokes 35 are tightened between the rim 21 and the hub 34, the rim 21, and in particular the wings 27, 28 on whose outer sides 29, 30 the braking races 31, 32 are formed, undergo a deformation (as already explained with reference to the prior art) such that the distance between the wings 27, 28 and more specifically between the outer sides 29, 30 at the spoke attachment areas 41-48 increases. The result is that the distance between the outer sides 29, 30 with the braking races 31, 32 of the rim 21 has lower variations with respect to the rim 21 without spokes (as shown in fig. 13b). The subsequent assembly of the tyre and its inflation determine a further outward deformation of the wings 27, 28 on the rim 21 (as already explained with reference to the prior art) in which in the spoke attachment areas the wings subjected to the pressure of the inflated tyre undergo a greater deformation than the deformation that they undergo in the intermediate areas. At best, as shown in figure 13c, such a deformation is such that the distance between the outer sides 29, 30 with the braking races 31, 32 of the rim 21 does not vary and remains constant along the entire circumference of the rim 21.

The rim 21 of figure 13a can be obtained, in general, according to what is described in the cited document EP 1 231 077, by providing that the shape of the mould in the area for forming the wings has the desired waved shape.

### Distributed waving effect compensation on a rim made from metallic material

Figures 14 and 15 show perspective view of a rim 121 and a wheel 133 according to a different embodiment of the invention.

The wheel 133 represented is again a rear wheel, of the type with grouped spokes, and comprises the rim 121, a hub 134 and a set of spoke connections 135 between the hub 134 and the rim 121. Unlike the embodiment of figures 11 and 12, the rim 121 is of the metallic type, made through extrusion of a rod of suitable cross section, calendering it and jointing the ends at a jointing area 138. Therefore, figures 4a to 4c are also representative of the section of the rim 121 and of the wheel 133, in circumferential areas different to the jointing area 138. Such figures 4a to 4c therefore also display the reference numerals of the wheel 133 in brackets.

In a position diametrically opposite the jointing area 138, in the rim 121 a hole 137 is made to house a valve for retaining air inside the tyre 136 that can be associated with the outside of the rim 121.

The jointing in the area 138 is carried out by butt welding of the ends of the extruded and calendered rod. A pair of full metallic inserts 139, 140 (summarily shown in figure 14) are inserted into the chamber 122 of the rim 121, used to allow the ends to be gripped with suitable pincers during welding without the risk of deforming the rim 121.

As an alternative to the welding and to the insertion of the inserts 139, 140, the jointing in the area 138 can take place through a sleeve, inserted with interference and with a possible gluing substance in the inner chamber 122 of the rim 121. Again alternatively, the joining in the area 138 can take place through pins inserted in the wall of the ends of the rim 121.

Figure 16a schematically shows a blank of the rim 121 after extrusion, calendering, joining in the jointing area 138 and after the braking races 131, 132 have been formed (for example by turning) on the outer sides 129, 130 of the wings 127, 128.

A deformation is carried out on such a preform of figure 16a (for example with one of the processes described hereafter) so that the outer sides 129, 130 of the wings 127, 128 of the rim 121 at the spoke attachment areas 141-148 are a shorter distance Da apart than the distance Di apart of the outer sides 129, 130 of the wings 127, 128 of the rim 121 at the intermediate areas 151-158 (figure 16b).

The distance in the axial direction between the outer sides 129, 130 varies progressively between the spoke attachment areas 141-148 and the intermediate areas 151-158, as shown by figure 16b.

When the wheel 133 is assembled using the rim 121 and the spokes 135 are tightened between the rim 121 and the hub 134, the rim 121, and in particular the outer sides 129, 130 of the wings 127, 128 on which the braking races 131, 132 are formed, undergo a deformation (as already explained with reference to the prior art) such that the distance between the outer sides 129, 130 at the spoke attachment areas 141-148 increases, without however reaching the distance at the intermediate areas 151-158. The result is that the distance between the outer sides 129, 130 with the braking races 131, 132 of the rim 121 has smaller variations than the rim 121 without spokes, as shown in figure 16c. When, finally, the tyre 136 is mounted on the wheel 133 and inflated, there is a deformation of the wings 127, 128 outwards with a non-uniform increase in the distance between the outer sides 129, 130 with the braking races 131, 132 along the circumference: in the jointing area 138 the rigidity of the rim 121 is greater and the deformation occurs to a lower extent, whereas in the spoke attachment areas 141-148 the rigidity of the rim 121 is less and the deformation occurs to a greater extent. However, the greater deformation in the spoke attachment areas 141-142 is compensated by the residual inward deformation. In the wheel 133 with the tyre 136 inflated, therefore, the distributed waving effect is reduced and, at best, is inexistent (as shown in figure 16d), whereas the localised waving effect in the jointing area 138 due to the joint is not compensated.

Figures 17a-17c show a variant of the steps described in figures 16a-16c for making the same wheel 133, in which first the spokes 135 are tightened and then the deformation of the rim 121 is carried out. The spokes 135 are mounted and tightened on the preform (figure 17a). The tightening, as stated, involves an outward deformation of the wings 127, 128 at the spoke attachment areas 141-148 (figure 17b). At this point the inward deformation of the wings 127, 128 is carried out (figure 17c) at the spoke attachment areas 141-148 to obtain a shorter distance Da compared to the distance Di existing between the wings 127, 128 in the intermediate areas 151-158.

When, finally, the tyre 136 is mounted on the wheel 133 and inflated, there is an outward deformation of the wings 127, 128 with a non-uniform increase in the distance between the outer sides 129, 130 with the braking races 131, 132 along the circumference: in the jointing area 138 the rigidity of the rim 121 is greater and the deformation occurs to a lower extent, whereas in the spoke attachment areas 141-148 the rigidity of the rim 121 is less and the deformation occurs to a greater extent. However, the greater deformation in the spoke attachment areas 141-142 is compensated by the residual inward deformation. In the wheel 133 with the tyre 136 inflated, therefore, the distributed waving effect is reduced and, at best, is inexistent (as shown in figure 17d), whereas the localised waving effect in the jointing area 138 due to the joint is not compensated.

It should be noted that, starting from the condition shown in figure 17c, if the spokes 135 are loosened (or removed), the rim 121 shall have the same shape obtained with the previous process before the assembly of the spokes 135, i.e. that of figure 16b.

### Localised waving effect compensation on a rim made from metallic material

Figures 19a and 19b show perspective views of a rim 221 and a wheel 233 according to a different embodiment of the invention.

The wheel 233 represented is a front wheel, of the type with equally distributed single spokes, and comprises the rim 221, a hub 234 and a set of spoke connections 235 between the hub 234 and spoke attachment areas 249 on the rim 221, alternating with intermediate areas 259. The rim 221 is of the metallic type, made through extrusion of a rod having a suitable cross section, calendering it and joining the ends at a jointing area 238. Therefore, figures 4a to 4c are also representative of the section of the rim 221 and of the wheel 233, in circumferential areas different to the jointing area 238. Such figures 4a to 4c thus also display the reference numerals of the wheel 233, in brackets.

In a position diametrically opposite the jointing area 238, a hole 237 is made in the rim 221 to house a valve for retaining air inside the tyre 236 that can be associated with the outside of the rim 221.

The jointing in the area 238 is carried out by butt welding of the ends of the extruded and calendered rod. A pair of full metallic inserts 239, 240 (summarily shown in figure 19a) are inserted into the chamber 222 of the rim 221, used to allow the ends to be gripped with suitable pincers during welding without the risk of deforming the rim 221.

Figures 18a to 18c refer to the rim 221 and to the wheel 233 .

Figure 18a schematically shows a blank of the rim 221 after extrusion, calendering, joining in the jointing area 238 and after the braking races 231, 232 have been formed (for example by turning) on the outer sides 229, 230 of the wings 227, 228.

A deformation is made on the preform of figure 18a (for example with one of the processes described hereafter) so that, in the rim 221, the outer sides 229, 230 of the wings 227, 228 with the braking races 231, 232, are a greater distance Dg apart at the jointing area 238 than the distance D of the outer sides 229, 230 in the other areas (widening of the jointing area 238, figure 18b).

The distance in the axial direction between the outer sides 229, 230 varies progressively between the jointing area 238 and the adjacent areas, as shown by figure 18b.

When the wheel 233 is assembled using the rim 221, the spokes 235 are tightened between the rim 221 and the hub 234 and the tyre 236 is mounted on the wheel 233 and inflated, there is an outward deformation of the wings 227, 228 with a uniform increase in the distance between the outer sides 229, 230 with the braking races 231, 232 along the entire circumference of the rim 221, except for the jointing area 238 in which the rigidity of the rim 221 is greater and the deformation occurs to a lower extent (figure 18c). However, such a lower deformation is compensated by the previous outward deformation. In the wheel 233 with the tyre 236 inflated, therefore, the localised waving effect due to the jointing is reduced and, at best, is inexistent (as shown in fig. 18c).

### Distributed and localised waving effect compensation on a rim made from metallic material

Figures 20a to 20d refer to a rim 321 and to a wheel 333 similar to the rim 121 and wheel 133 described above; in particular, the rim 221 is of the metallic type with a jointing area 338 and the wheel 333 has the same distribution of the spokes as the type described above.

Therefore, figures 14 and 15 are also representative of the rim 321 and of the wheel 333. Such figures thus also display the reference numerals of the wheel 333, in brackets. Moreover, figures 4a to 4c are also representative of the section of the rim 321 and of the wheel 333, in circumferential areas different to the jointing area 338. Such figures 4a to 4c thus also display the reference numerals of the wheel 333 in brackets.

A first deformation is made on the preform of figure 20a (for example with one of the processes described hereafter) so that, in the rim 321, the outer sides 329, 330 of the wings 327, 328 with the braking races 331, 332, are a shorter distance Da apart at the spoke attachment areas 341-348 than the distance Di of the outer sides 329, 330 with the braking races 331, 332 of the rim 321 at the intermediate areas 351-358. A second deformation is then made so that the outer sides 329, 330 of the wings 327, 328 of the rim 321 are a greater distance Dg apart at the jointing area 338 than the distance Di of the outer sides 329, 330 in the adjacent areas.

The distance in the axial direction between the outer sides 329, 330 varies progressively between the jointing area 338 and the adjacent areas and between the spoke attachment areas 341-348 and the intermediate areas 351-358, as shown by figure 20b.

When the wheel 333 is assembled using the rim 321 described and the spokes 335 are tightened between the rim 321 and the hub 334, the rim 321 and in particular the wings 327, 328 on which the braking races 331, 332 are formed, undergo a deformation for which reason the distance between the outer sides 329, 330 at the spoke attachment areas 341-348 increases, without however reaching the distance at the intermediate areas 351-358. The result is that shown in figure 20c.

When, finally, the tyre 336 is mounted on the wheel 333 and inflated, there is an outward deformation of the wings 327, 328 with a non-uniform increase in the distance between the outer sides 329, 330 with the braking races 331, 332 along the circumference: in the jointing area 338 the rigidity of the rim 321 is greater and the deformation occurs to a lower extent, whereas in the spoke attachment areas 341-348 the rigidity of the rim 321 is less and the deformation occurs to a greater extent. However, the reduced deformation in the jointing area 338 is compensated by the previous outward deformation, as well as the greater deformation in the spoke attachment areas 341-348 is compensated by the residual inward deformation. In the wheel 333 with the tyre 336 inflated, therefore, the localised waving effect in the jointing area 338 due to the joint and the distributed waving effect are reduced and, at best, are inexistent (as shown in figure 20d).

The distance between the outer sides 329, 330 of the wings 327, 328 with the braking races 331, 332 has smaller variations, and at best no variation, along the entire circumference of the wheel 333, including the jointing area 338.

In the wheel 333, therefore, the distributed waving and localised waving effects are compensated.

Figures 21a-21d show a variant of the steps described in figures 20a-20d for making the same wheel 333, in which first the spokes 335 are tightened and then the rim 321 is deformed. The spokes 335 are mounted on the preform (figure 21 a) and tightened. The tightening, as stated, involves an outward deformation of the wings 327, 328 at the spoke attachment areas 341-348 (figure 21 b). At this point a first deformation is carried out to deform the wings 327, 328 inwards at the spoke attachment areas 341-348 to obtain a shorter distance Da than the distance Di existing between the wings 327, 328 in the intermediate areas 351-358. Then follows a second outward deformation of the wings 327, 328 so that the outer sides 329, 330 with the braking races 331, 332 are a greater distance Dg apart at the jointing area 338 than the distances Da and Di of the outer sides 329, 330 in the other areas.

When, finally, the tyre 336 is mounted on the wheel 333 and inflated, there is an outward deformation of the wings 327, 328 with a non-uniform increase in the distance between the outer sides 329, 330 with the braking races 331, 332 along the circumference: in the jointing area 338 the rigidity of the rim 321 is greater and the deformation occurs to a lower extent, whereas in the spoke attachment areas 341-348 the rigidity of the rim 321 is less and the deformation occurs to a greater extent. However, the lower deformation is compensated by the previous outward deformation, just as the greater deformation in the spoke attachment areas 341-348 is compensated by the residual inward deformation. In the wheel 333 with the tyre 336 inflated, therefore, the localised waving effect due to the jointing 338 is reduced and, at best, is inexistent (figure 21 d).

The distance between the outer sides 329, 330 of the wings 327, 328 with the braking races 331, 332 has smaller variations, and at best no variation, along the entire circumference of the wheel 333, including the jointing area 338.

It should be noted that, starting from the condition shown in figure 21d, if the tyre 336 is deflated and the spokes 335 are loosened (or removed), the rim 321 shall have the same shape obtained with the previous process before the assembly of the spokes 335, i.e. that of figure 20b.

### Localised waving effect compensation on a rim made from metallic material: dual variant

For the described solutions, it is possible to provide an alternative dual process of deformation of the rim. As an example hereafter the description of such an alternative is given for the wheel 233 (figures 18a-18c), with reference to figures 22a to 22c.

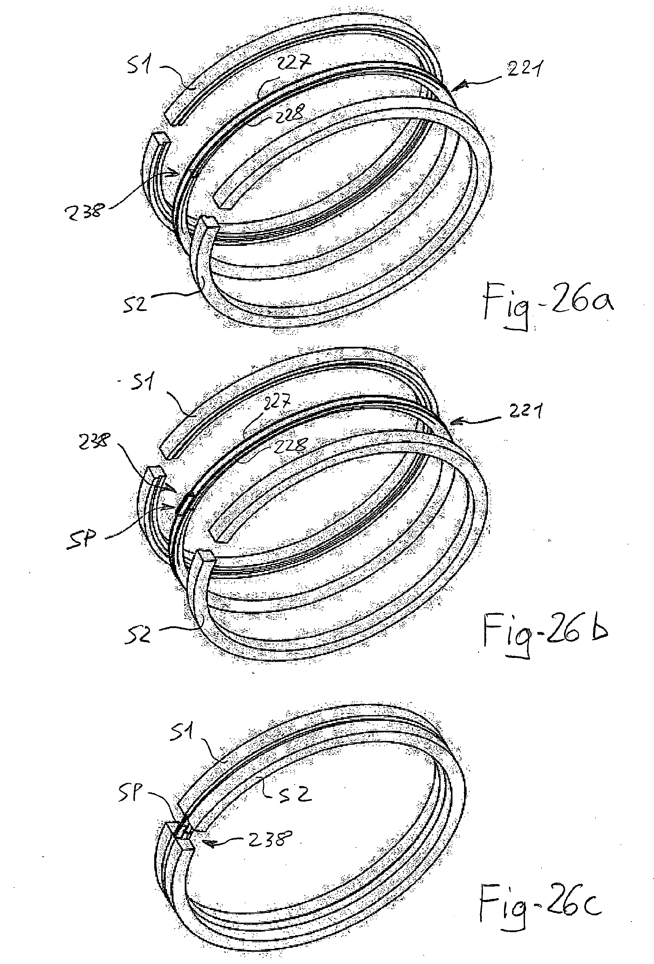

A deformation is carried out on such a preform of figure 22a (for example with one of the processes described hereafter, in particular the one illustrated in figures 26a to 26d) so that, in the rim 221, the outer sides 229, 230 of the wings 227, 228 with the braking races 231, 232 of the rim 221 are a greater distance Dg apart at the jointing area 238 than the distance D of the outer sides 229, 230 in the other areas (similarly to what has been seen for figures 18a-18c). In this case, however, instead of widening the jointing area 238, one starts from a preform with the outer sides 229, 230 of the wings 227, 228 at a greater distance equal to Dg (figure 22a) and the wings 227, 228 are narrowed to the distance D except for in the jointing area 238 (figure 22b). At this point the spokes 235 are mounted and tightened and the tyre 236 is mounted and inflated (figure 22c) similarly to what has been seen with reference to figure 18c.

### Processes for making the rim, with compensation of the flaring effect

A rim like the rims shown and described above can be made in various ways so as to compensate the flaring effect.

In the case of a rim made from composite material, the shape of the rim (figures 3a and 4a) with the wings converging is achieved directly in the moulding step of the rim (for example using the process described in EP 1 231 077 and modifying the shape of the mould in accordance with the profile to be obtained).

In the case of a rim made from aluminium (or another metal), it is possible to make the extruded piece directly with the modified shape of the rim (figures 3a and 4a).

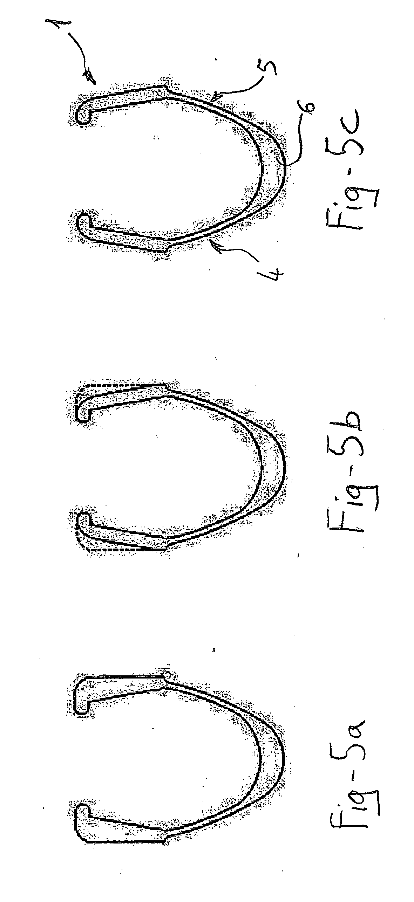

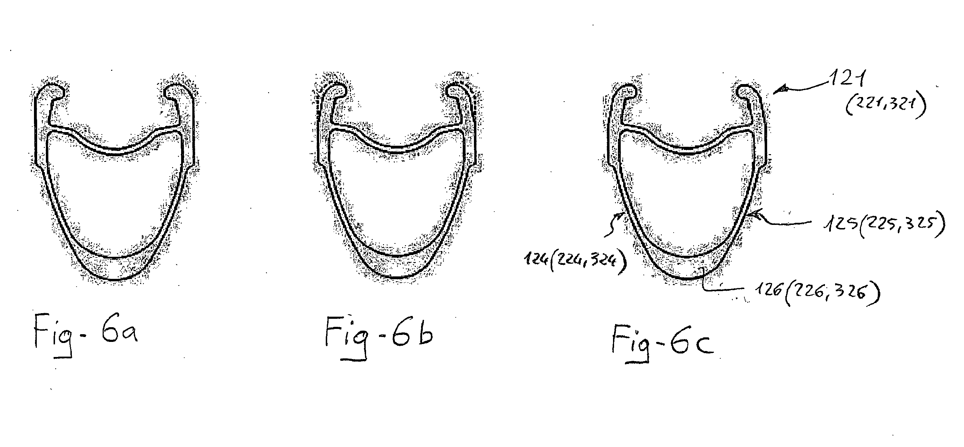

Alternatively, again for rims made from metal and as shown in figures 5a-5c and 6a-6c, it can be provided to start from an extruded piece with the wings of suitable section (increased), then machining the outer sides of the wings along the entire circumference (turning) so that they have the desired inclination.

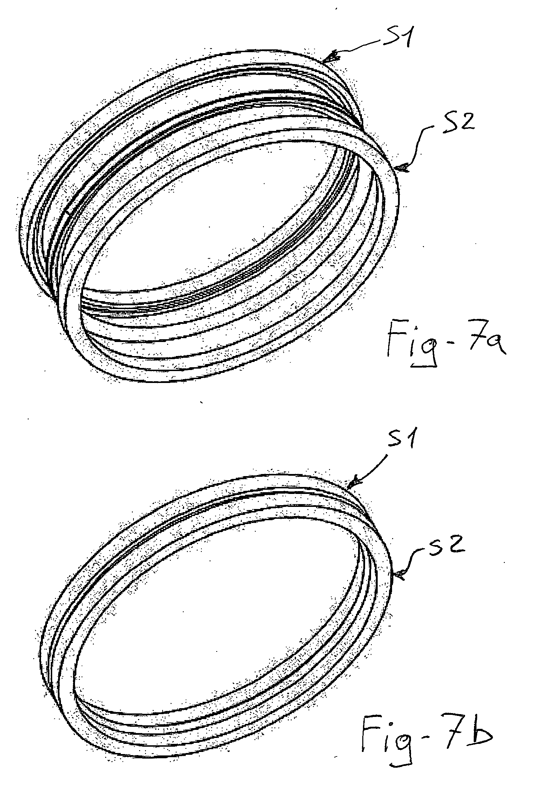

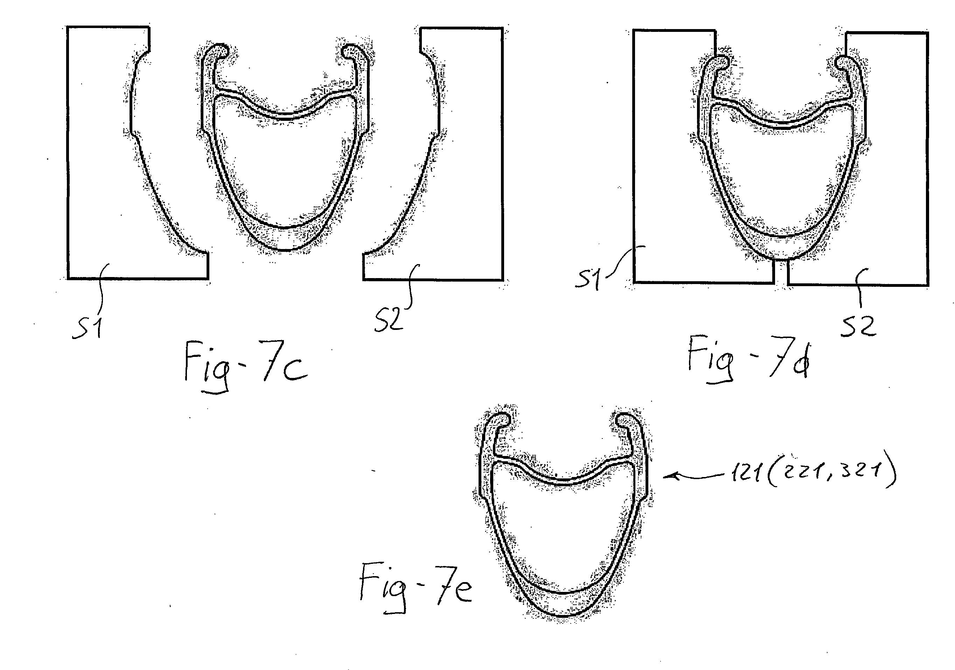

Another alternative is to provide a standard extruded piece (for example the one shown in figure 2a) that is then inserted inside two suitably shaped half-moulds S1 and S2, as schematically indicated in figures 7a to 7d; the closing of the half-moulds S1 and S2 determines the deformation of the wings along the entire circumference and therefore the desired shape of figure 7e (that corresponds to the rim of figure 4a).

### Processes for the deformation of the wings to compensate the localised waving effect and the distributed waving effect

A possible process for obtaining a deformation of the wings, in this particular case an outward deformation, is described with reference to figures 23a to 23d.

At the area to be widened (for example at the jointing 238 of the rim 221), the wing 228 is gripped between the ends of the arms P1 and P2 of a pincer P (figure 23b). The pincer P is rotated (figure 23c) in a controlled manner so that the wing 228 is deformed by a predetermined amount (for example 0.1mm). The operation is repeated in an analogous way for the other wing 227. The final effect shall be a widening of the wings 227, 228, and therefore an increase in distance between the outer sides 229, 230, by 0.2mm (figure 23d).

In a similar way, the deformation of the wings can be carried out inwards.

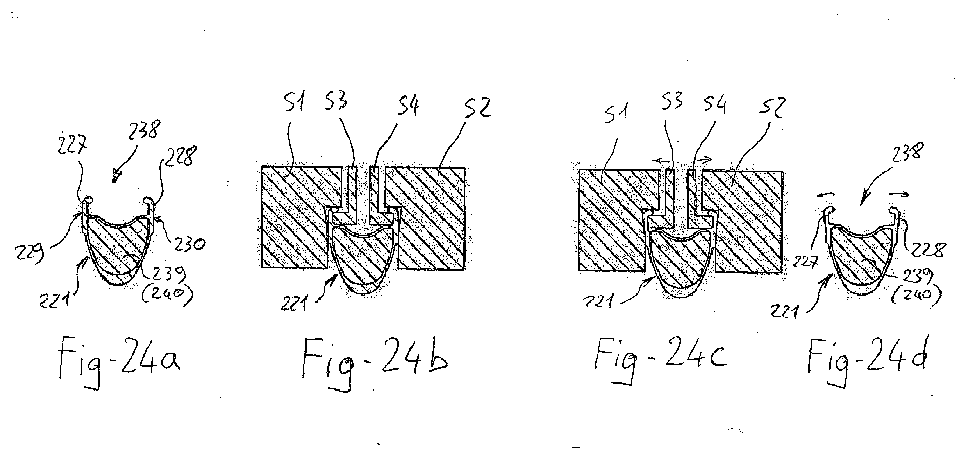

A first variant of such a process is described with reference to figures 24a to 24d.

At the area to be widened (for example at the jointing 238 of the rim 221), the rim 221 is inserted in two half-moulds S1 and S2. In the area located between the wings 227, 228 two punches S3 and S4 are inserted (figure 24b) that push the wings 227, 228 against the respective shaped walls of the half-moulds S1 and S2 (figure 24c).

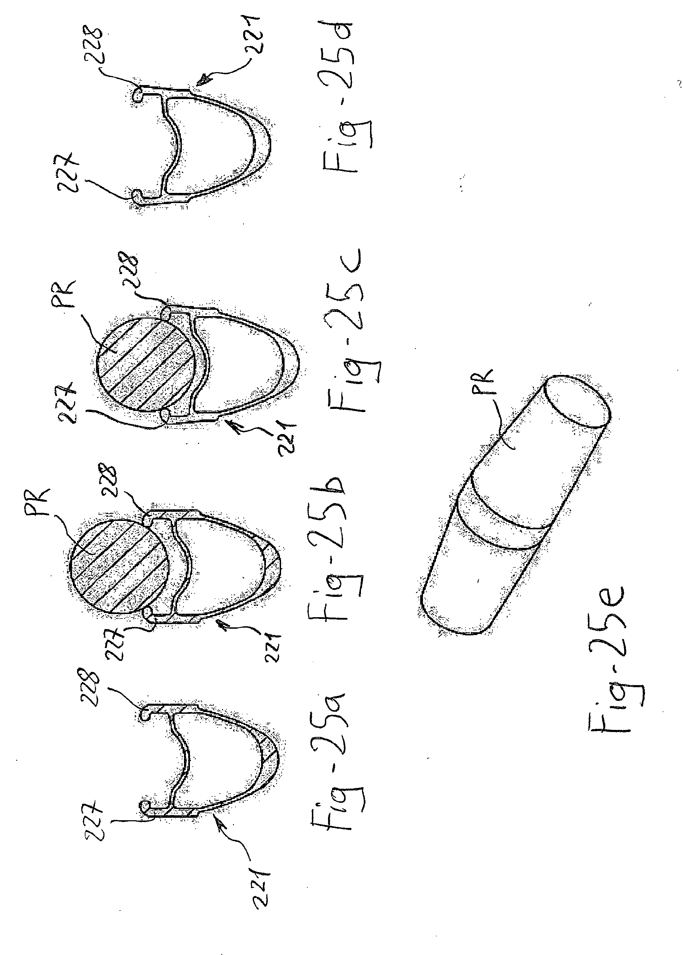

A second variant of such a process is described with reference to figures 25a to 25e.

At the area to be widened (for example at the jointing 238 of the rim 221), a presser element PR in the form of a tapered toroidal slug (figure 25e) is pushed radially from the outside towards the centre of the rim 221 (figure 25c) to deform the wings 227, 228 outwards.

A process for obtaining a dual deformation of the wings, as provided in particular in the solution of figures 22a-22c, is described with reference to figures 26a to 26d.

At the jointing area 238, between the wings 227 and 228 an element of thickness SP is inserted to keep the jointing area 238 at the distance Dg (figure 19b). The rim 221 is then inserted into two half-moulds S1, S2 that push the wings 227, 228 to the distance apart D for the entire circumference, except for the jointing area 238 where the element of thickness SP is located.

As stated above in the description of the various embodiments, at the moment of inflation of the tyre the wings of the rim deform outwards causing them to move apart for the entire circumference of the rim and thus causing the braking races to move away. Such a flaring effect and its compensation have been described in greater detail for the wheels 3 and 33, with reference to figures 3 to 7.

It should be noted that each of the compensations of the flaring, distributed waving and localised waving effects (where necessary, i.e. with metallic rims with jointing) can be implemented alone or with one or more of the others on the same rim.

As an example, in the previous description of the wheel 3 the compensation of the flaring effect has been illustrated, but there could also be a compensation of the distributed waving effect and/or (if the rim 1 is metallic) of the localised waving effect. For the wheel 133 the compensation of the distributed waving effect has been illustrated, but not of the localised waving effect and of the flaring effect, which are still present since the rim 121 is made from metal, with jointing. For the wheel 233 the compensation of the localised waving effect has been illustrated, but not of the distributed waving effect and of the flaring effect, which are still present since the rim 221 is made from metal, with jointing. For the wheel 333 the compensation both of the distributed waving effect and of the localised waving effect have been illustrated.

Furthermore, it should be noted that the previous description of wheels with compensation of the distributed and localised waving effects (wheels 33, 133, 233 and 333) has been made with reference in particular to rims with a section with an inverted A-shaped configuration, since the U-shaped configuration is not very widely used. It is clear, however, that the compensation of the distributed and/or localised waving effects in such rims shall be carried out in a similar way to what has been seen above, taking into consideration that the compensation of the distributed waving effect must provide for a widening of the respective spoke attachment areas with respect to the intermediate areas and not for a narrowing, as described for the inverted A-shaped configuration.

On the other hand, in the case of rims with a more complex section than those with an inverted A-shape (rims with many chambers), the behaviour with respect to the distributed waving effect is the same as the rims with an inverted A-shaped section, and therefore what has been described above also applies directly to such rims.

## Claims

1. Rim, suitable for being coupled with a hub (34, 134, 234, 334) to form a bicycle wheel (13, 33, ,133, 233, 333), comprising a pair of wings (7, 8; 27, 28; 127, 128; 227, 228; 327, 328) connected by at least one bridge (6, 23, 26), **characterised in that** the wings (7, 8; 27, 28; 127, 128; 227, 228; 327, 328) converge.

2. Rim according to claim 1, wherein each wing (7, 8; 27, 28; 127, 128; 227, 228; 327, 328) has an outer side (9, 10; 29, 30; 129, 130; 229; 230; 339, 330) on which a braking race (11, 12; 31, 32; 131, 132; 231, 232; 331, 332) is formed.

3. Rim according to claim 1, wherein the rim comprises a plurality of spoke attachment areas (41-48; 141-148; 341-348), alternating in the circumferential direction with a plurality of intermediate areas (51-58; 151-158; 351-358) in said at least one bridge (6, 23, 26), and wherein the axial distance between the wings (7, 8; 27, 28; 127, 128; 327, 328) at the spoke attachment areas (41-48; 141-148; 341-348) is different to the axial distance between the wings (7, 8; 27, 28; 127, 128; 327, 328) at the intermediate areas (51-58; 151-158; 351-358).

4. Rim according to claim 1, comprising a single bridge (6) between the pair of wings, and wherein the axial distance between the wings (7, 8; 27, 28; 127, 128; 327, 328) at the spoke attachment areas (41-48; 141-148; 341-348) is greater than the axial distance between the wings (7, 8; 27, 28; 127, 128; 327, 328) at the intermediate areas (51-58; 151-158; 351-358).

5. Rim according to claim 1, comprising a lower bridge (26) and at least one upper bridge (23) between the pair of wings (7, 8; 27, 28; 127, 128; 327, 328), wherein the axial distance between the wings (7, 8; 27, 28; 127, 128; 327, 328) at the spoke attachment areas (41-48; 141-148; 341-348) is smaller than the axial distance between the wings (7, 8; 27, 28; 127, 128; 327, 328) at the intermediate areas (51-58; 151-158; 351-358).

6. Rim according to one of claims 1 to 5, wherein the axial distance between the wings (7, 8; 27, 28; 127, 128; 227, 228; 327, 328) is measured between the outer sides thereof.

7. Rim according to claim 1, made from metal from a blank that is extruded, calendared into circular shape and closed upon itself through jointing between the ends of the blank, wherein the axial distance between the wings (127, 128; 227, 228; 327, 328) at the jointing area (138, 238, 338) is greater than the axial distance between the wings (127, 128; 227, 228; 327, 328) at the areas far from the jointing area (138, 238, 338).

8. Rim according to claims 6 and 7, wherein the axial distance between the wings (127, 128; 227, 228; 327, 328) at the jointing area (138, 238, 338) is greater than the axial distance between the wings (127, 128; 227, 228; 327, 328) at the spoke attachment areas (141-148; 341-348) as well as the axial distance between the wings (127, 128; 227, 228; 327, 328) at the intermediate areas (151-158; 351-358).

9. Bicycle wheel, comprising a hub (34, 134, 234, 334), a rim (1, 21, 121, 221, 321) and a plurality of spokes (35, 135, 235, 335) for connection of the rim to the hub (34, 134, 234, 334), wherein the rim comprises a pair of wings (7, 8; 27, 28; 127, 128; 227, 228; 327, 328) for holding a tyre (16, 136, 236, 336) connected by at least one bridge (6, 23, 26), **characterised in that**, when the tyre is dismounted from the wheel or else - if it is mounted - it is flat, the wings (7, 8; 27, 28; 127, 128; 227, 228; 327, 328) converge.

10. Bicycle wheel according to claim 9, wherein, when the tyre (16, 136, 236, 336) is mounted on the wheel and is inflated, the wings (7, 8; 27, 28; 127, 128; 227, 228; 327, 328) converge less.

11. Bicycle wheel according to claim 9, wherein, when the tyre (16, 136, 236, 336) is mounted on the wheel and is inflated, the wings (7, 8; 27, 28; 127, 128; 227, 228; 327, 328) are parallel.

12. Bicycle wheel according to claim 9, wherein the rim (1, 21, 121, 321) comprises a plurality of spoke attachment areas (41-48; 141-148; 341-348), alternating in the circumferential direction with a plurality of intermediate areas (51-58; 151-158; 351-358) in said at least one bridge (6, 23, 26), and wherein in said rim (1, 21, 121, 321), before connection to the hub (34, 134, 234, 334) through the spokes (35, 135, 235, 335), the axial distance between the wings (7, 8; 27, 28; 127, 128; 327, 328) at the spoke attachment areas (41-48; 141-148; 341-348) is different to the axial distance between the wings (7, 8; 27, 28; 127, 228; 327, 328) at the intermediate areas (51-58; 151-158; 351-358).

13. Bicycle wheel according to claim 9, wherein the rim (121, 221, 321) is made from metal from a blank that is extruded, shaped into circular shape and closed upon itself through application of a joint (138, 238, 338) between the ends of the blank, in which, when the tyre (136, 236, 336) is dismounted from the wheel or else - if it is mounted - it is flat, the axial distance between the wings (127, 128; 227, 228; 327, 328) at the joint (138, 238, 338) is greater than the axial distance between the wings (127, 128; 227, 228; 327, 328) at the areas far from the joint (138, 238, 338).

14. Bicycle wheel according to claim 13, wherein, when the tyre (136, 236, 336) is mounted on the wheel and is inflated, the variation in axial distance between the wings (127, 128; 227, 228; 327, 328) at the joint (138, 238, 338) and at the areas far from the joint (138, 238, 338) is less than the variation in axial distance between the wings (127, 128; 227, 228; 327, 328) at the joint (138, 238, 338) and at the areas far from the joint (138, 238, 338) with the tyre (136, 336) (136, 236, 336) deflated.

15. Process for making a rim (1, 21, 121, 221, 321) suitable for being mounted in a bicycle wheel, comprising the step of:
a) providing a pair of wings (7, 8; 27, 28; 127, 128; 227, 228; 327, 328) connected by at least one bridge (6, 23, 26),
**characterised in that** in step a) the wings (7, 8; 27, 28; 127, 128; 227, 228; 327, 328) are formed converging.

16. Process according to claim 15, comprising the step of:
b) providing a plurality of spoke attachment areas (41-48; 141-148; 341-348) and a plurality of intermediate areas (51-58; 151-158; 351-358), alternating in the circumferential direction, in said at least one bridge (6, 23, 26);
wherein in step a) it is provided that the wings (7, 8; 27, 28; 127, 128; 327, 328) be shaped and sized so that the axial distance between the wings (7, 8; 27, 28; 227, 228; 327, 328) at the spoke attachment areas (41-48; 141-148; 341-348) is different to the axial distance between the wings (7, 8; 27, 28; 127, 128; 327, 328) at the intermediate areas (51-58; 151-158; 351-358).

17. Process according to claim 16, wherein step a) comprises the substeps of:
a') forming the rim (1, 21, 121, 321) with the wings (7, 8; 27, 28; 127, 128; 327, 328) spaced apart uniformly along the entire circumference;
a") deforming the wings (7, 8; 27, 28; 127, 128; 327, 328) varying the distance between them at the spoke attachment areas (41-48; 141-148; 341-348) and/or at the intermediate areas (51-58; 151-158; 351-358).

18. Process according to claim 17, wherein step a") comprises bending the wings (7, 8; 27, 28; 127, 128; 327, 328) inwards and/or outwards at the spoke attachment areas (41-48; 141-148; 341-348) and/or at the intermediate areas (51-58; 151-158; 351-358).

19. Process according to claim 17, wherein step a") comprises removing material from the outer sides of the wings (7, 8; 27, 28; 127, 128; 327, 328) at the spoke attachment areas (41-48; 141-148; 341-348) and/or at the intermediate areas (51-58; 151-158; 351-358).

20. Process according to claim 16, wherein step a) provides for forming the rim (1, 21, 121, 321) directly with the wings (7, 8; 27, 28; 127, 128; 327, 328) spaced apart non-uniformly along the circumference.

21. Process according to claim 15, wherein the rim (121, 221, 321) is made from metal from a blank that is extruded, shaped into circular shape and closed upon itself through jointing between the ends of the blank, also comprising the steps of:
c) deforming the wings (127, 128; 227, 228; 327, 328) so that the axial distance between the wings (127, 128; 227, 228; 327, 328) at the jointing area (138, 238, 338) is greater than the axial distance between the wings (127, 128; 227, 228; 327, 328) at the areas far from the jointing area (138, 238, 338).

22. Process for making a bicycle wheel, comprising the steps of:
a) making a rim (1, 21, 121, 221, 321) comprising a pair of wings (7, 8; 27, 28; 127, 128; 227, 228; 327, 328) connected by at least one bridge (6, 23, 26);
b) connecting the rim (1, 21, 121, 221, 321) with a hub (34, 134, 234, 334) through spokes or arms (35, 135, 235, 335);
**characterised in that** in step a) the wings (7, 8; 27, 28; 127, 128; 227, 228; 327, 328) are formed converging.

23. Process according to claim 22, comprising the steps of:
c) mounting a tyre (16, 136, 236, 336) on the rim (1, 21, 121, 221, 321);
d) inflating the tyre (16, 136, 236, 336) mounted on the rim (1, 21, 121, 221, 321) to a predetermined inflation pressure, so that the wings (7, 8; 27, 28; 127, 128; 227, 228; 327, 328) are parallel.

24. Process according to claim 22, comprising the steps of:
e) providing a plurality of spoke attachment areas (41-48; 141-148; 341-348) and a plurality of intermediate areas (51-58; 151-158; 351-358), alternating in the circumferential direction, in said at least one bridge (6, 23, 26);
wherein in step b) the spokes (35, 135, 235, 335) are tightened between the hub (34, 134, 234, 334) and said spoke attachment areas (41-48; 141-148; 341-348) of said at least one bridge (6, 23, 26);
and wherein in step a) it is provided that the wings (7, 8; 27, 28; 127, 128; 327, 328) are shaped and sized so that before the spokes (35, 135, 235, 335) are tightened the axial distance between the wings (7, 8; 27, 28; 127, 128; 327, 328) at the spoke attachment areas (41-48; 141-148; 341-348) is different to the axial distance between the wings (7, 8; 27, 28; 127, 128; 327, 328) at the intermediate areas (51-58; 151-158; 351-358).

25. Process according to claim 24, wherein step a) comprises the substeps of:
a') forming the rim (1, 21, 121, 321) with the wings (7, 8; 27, 28; 127, 128; 327, 328) spaced apart uniformly along the entire circumference;
a") deforming the wings (7, 8; 27, 28; 127, 128; 327, 328) varying the distance between them at the spoke attachment areas (41-48; 141-148; 341-348) and/or at the intermediate areas (51-58; 151-158; 351-358).

26. Process according to claim 25, wherein step a") comprises bending the wings (7, 8; 27, 28; 127, 128; 327, 328) inwards and/or outwards at the spoke attachment areas (41-48; 141-148; 341-348) and/or at the intermediate areas (51-58; 151-158; 351-358).

27. Process according to claim 25, wherein step a") comprises removing material from outer sides of the wings (7, 8; 27, 28; 127, 128; 327, 328) at the spoke attachment areas (41-48; 141-148; 341-348) and/or at the intermediate areas (51-58; 151-158; 351-358).

28. Process according to claim 24, wherein step a) provides for forming the rim (1, 21, 121, 221, 321) directly with the wings (7, 8; 27, 28; 127, 128; 327, 328) spaced apart non-uniformly along the circumference.

29. Process according to claim 23, wherein the rim (121, 221, 321) is made from metal from a blank that is extruded, shaped into circular shape and closed upon itself through jointing between the ends of the blank, also comprising the steps of:
f) deforming the wings (127, 128; 227, 228; 327, 328) so that the axial distance between the wings (127, 128; 227, 228; 327, 328) at the jointing area is greater than the axial distance between the wings (127, 128; 227, 228; 327, 328) at the areas far from the jointing area;
wherein in step d), the tyre (136, 236, 336) mounted on the rim (121, 221, 321) is inflated to the predetermined inflation pressure, so that the axial distance between the wings (127, 128; 227, 228; 327, 328) at the jointing area is equal to the axial distance between the wings (127, 128; 227, 228; 327, 328) at the areas far from the jointing area.
